Europäisches Patentamt

(19) European Patent Office

Office européen des brevets

(11) Numéro de publication : **0 247 943 B1**

(12) **FASCICULE DE BREVET EUROPEEN**

(45) Date de publication du fascicule du brevet :
04.09.91 Bulletin 91/36

(51) Int. Cl.⁵ : **G01D 15/24, B43L 13/02**

·㉑ Numéro de dépôt : **87401190.1**

(22) Date de dépôt : **27.05.87**

(54) **Machine à dessiner.**

(30) Priorité : **29.05.86 FR 8607742**
**29.05.86 FR 8607743**

(43) Date de publication de la demande :
**02.12.87 Bulletin 87/49**

(45) Mention de la délivrance du brevet :
**04.09.91 Bulletin 91/36**

(84) Etats contractants désignés :
**BE CH DE ES FR GB IT LI NL SE**

(56) Documents cités :
**AU-A- 411 601**
**DE-A- 2 633 709**
**GB-A- 2 009 933**
**US-A- 4 445 798**
**PATENT ABSTRACTS OF JAPAN, vol. 6, no.**
**125 (P-127)[1003], 10 juillet 1982; & JP-A- 57 52**
**818 (KENJI TAKEUCHI) 29-03-1982**
**HEWLETT-PACKARD JOURNAL, vol. 32, no.**
**10, octobre 1981, pages 3-9, Hewlett-Packard**
**Co., Amstelveen, NL; W.D. BARON et al.:**
**"Development of a high-performance low-**
**mass, low-inertia plotting technology"**

(73) Titulaire : **Océ Graphics France S.A.**
**1, Rue Jean Lemoine B.P. 113**
**F-94003 Créteil Cedex (FR)**

(72) Inventeur : **Perville, Jacques**
**90, avenue Ernest-Renan**
**F-94120 Fontenay sous Bois (FR)**
Inventeur : **Lasjaunias, Thierry**
**19, rue Erard**
**F-75012 Paris (FR)**
Inventeur : **Dard, Jean-Claude**
**29, rue des Glycines**
**F-93250 Villemomble (FR)**
Inventeur : **Jaffres, Rémy**
**Rue Rieussec Clos Saint-Vigor B2-201**
**F-78220 Viroflay (FR)**

(74) Mandataire : **Hanneman, Henri W.A.M.**
**Océ-Nederland B.V. Patents and Information**
**Postbus 101**
**NL-5900 MA Venlo (NL)**

Jouve, 18, rue Saint-Denis, 75001 PARIS

## Description

La présente invention concerne les machines à dessiner et plus particulièrement les traceurs du type comprenant: un chariot portant une tête d'écriture, un dispositif de guidage du chariot en translation suivant une première direction (Y), des premiers moyens d'entraînement pour entraîner le chariot en déplacement dans la première direction, un tambour mobile en rotation autour d'un axe parallèle à la première direction, des moyens d'engagement d'un support d'impression avec le tambour, et des deuxièmes moyens d'entraînement pour entraîner ledit tambour en rotation afin de déplacer le support d'impression dans une deuxième direction (X) perpendiculaire à la première.

Dans les traceurs de ce type, un dessin est reproduit sur le support d'impression, tel qu'une feuille de papier, par combinaison du déplacement de la tête d'écriture dans la première direction (Y) et du déplacement du support d'impression dans la deuxième direction (X).

Dans les traceurs connus, les moyens d'entraînement sont constitués par deux moteurs électriques rotatifs reliés par des transmissions respectives, l'un au chariot portant la tête d'écriture, l'autre au tambour en prise avec le support d'impression tel qu'une feuille de papier. Les transmissions traditionnelles comprennent, pour l'entraînement du tambour, des réducteurs à engrenages ou à courrroies et, pour l'entraînement du chariot, des organes de transmission tels que courroie crantée, ruban ou câble.

Ces transmissions entraînent divers inconvénients.

D'abord, elles représentent un nombre important de pièces qui augmente le coût de l'appareil et complique son montage.

Ensuite, les mouvements issus des moteurs sont transmis au chariot et au support d'impression avec des erreurs introduites par les jeux successifs et les élasticités des transmissions. La précision avec laquelle les consignes de déplacement appliquées aux moteurs sont suivies par la tête d'écricture et le support d'impression s'en trouve grandement affectée.

Un premier objet de la présente invention est de fournier une machine à dessiner dans laquelle est assurée la parfaite orthogonalité des directions X et Y, condition nécessaire à l'obtention de tracés précis et reproductibles. L'invention vise aussi à satisfaire cette condition sans qu'il soit nécessaire de procéder à des réglages délicats des positions relatives d'éléments constitutifs de la machine. Enfin, l'invention a encore pour objet de proposer une structure de machine simplifiée afin de faciliter la construction et le montage de ses différents organes.

Un autre objet de la présente invention est de fournir un traceur dans lequel les chaînes cinématiques sur les axes X et Y ont un comportement dynamique nettement amélioré, apportant une précision accrue sur le tracé.

Selon un premier aspect de l'invention, une machine du type défini en tête de la présente description comprend une poutre profilée en une seule pièce s'étendant suivant la premiere direction avec une première partie qui, par sa rigidité propre, supporte et guide le chariot portant la tête d'éctriture tout le long de son déplacement dans la première direction (Y), et avec une deuxième partie tubulaire pour recevoir ledit tambour, une ouverture allongée étant formée dans la deuxième partie tubulaire tout le long de la zone d'action de la tête d'écriture pour permettre d'écrire sur le support d'impression passant par ledit tambour.

L'integration dans une même structure profilée en une seule pièce du guidage du chariot et des supports du tambour qui entraîne le support d'impression assure l'orthogonalité et la stabilité requises des directions X et Y. De plus, cette structure de base peut être obtenue simplement en coupant un profilé à la longueur voulue selon la taille de la machine, d'ou une fabrications économique d'une série de machines même ayant des formats différents.

Afin de permettre le passage du support d'impression entre la première partie de la poutre et le tambour, une découpe est avantageusement formée dans la poutre tout le long de la zone d'action de la tête d'écriture.

Le guidage du chariot est assuré par un ou plusieurs rails de guidage formés par la poutre ou rapportés sur celle-ci. Dans ce dernier cas, la rigidité des rails est assurée par la poutre le long de lauqelle ils sont fixés, par exemple par collage.

Chaque palier de support du tambour est défini par une surface cylindrique de la poutre profilée.

Le tambour qui entraîne le support d'impression peut être muni de picots pour l'entraînement d'une bande de papier continue. Dans le cas d'une machine à dessiner feuille à feuille, la feuille de papier est par exemple entraînée par friction le long de ses bords tout en étant appliquée sur la machine par dépression.

Selon un autre aspect de l'invention, le chariot portant l'organe d'écriture et le tambour qui entraîne le support d'impression sont directement couplés aux parties mobiles d'un premier et d'un deuxième moteurs, respectivement.

Avantageusement, le premier moteur est un moteur électrique linéaire dont la partie mobile, par exemple l'induit, est solidaire du chariot et coopère avec une partie fixe s'etendant parallèlement à la première direction (Y).

La deuxième moteur est un moteur électrique rotatif dont la partie tournante est solidaire du tambour en prise avec le support d'impression.

Ainsi, le chariot et le tambour sont directement entraînés par des moteurs respectifs, sans dispositifs de transmission de mouvement intermédiaires.

Par rapport aux traceurs de l'art antérieur utilisant de tels dispositifs de transmission, il en résulte, d'une part, l'élimination quasi totale des jeux et frottements entre moteurs et éléments (tête d'écriture et support d'impression) dont les déplacements sont commandés et, d'autre part, une diminution de l'inertie des pièces en mouvement.

Sur les deux axes X, Y, les chaînes cinématiques sont alors à même de suivre plus exactement et plus rapidement les consignes de déplacement transmises aux moteurs. L'invention permet par conséquent de réaliser des machines graphiques de hautes performances car les chaînes cinématiques sont particulièrement aptes à être activées par des servomécanismes de haute qualité dont elles peuvent exploiter les performances avec une fidélité optimale. De plus, l'élimination des dispositifs de transmission fait que les chaînes cinématiques présentent des caractéristiques peu sujettes à variation. Et ces avantages s'accompagnent d'une diminution du nombre de pièces utilisées pour les cinématiques, d'où une simplification de la structure et du montage du traceur, et une diminution correspondante de son coût.

On notera ici qu'il est certes connu d'utiliser un moteur linéaire pour déplacer une tête d'impression dans une imprimante. Un tel dispositif est par exemple décrit dans le brevet US 4 445 798; mais dans ce dispositif connu, la tête d'impression balaie toute la largeur du support d'impression en un seul sens. Il n'en est pas de même dans un traceur. Les problèmes d'entraînement qui se posent sont tout à fait différents car les déplacements en X et en Y doivent être coordonnés pour réaliser le tracé à reproduire sous forme d'une succession de tronçons de lignes, généralement une succession de segments de directions diverses, avec un maximum de rapidité et de précision.

L'invention sera mieux comprise à la lecture de la description faite ci-après à titre indicatif mais non limitatif, en référence au dessin annexé qui illustre un mode de réalisation d'une machine à dessiner conforme à l'invention.

Dans cette machine feuille à feuille, le tracé sur une feuille de papier est réalisé par combinaison du mouvement en translation de l'organe d'écriture 10 porté par une tête d'écriture 11 dans la direction Y et du mouvement en translation de la feuille de papier en direction X sous l'action d'un tambour d'entraînement 20 contre lequel la feuille est appliquée au moyen de galets presseurs.

L'élément structurel de base de la machine est constitué par une poutre 40 en une seule pièce formée par un tronçon de profilé métallique, par exemple en aluminium, obtenu par extrusion. La poutre 40 s'etend parallèlement à l'axe Y. Elle comprend notamment une première partie 41 formant en particulier une structure de guidage et de support d'un chariot 12 qui porte la tête d'écriture 11, et une deuxième partie 45 formant une structure de support et de guidage du tambour rotatif 20.

Dans l'exemple illustré, la première partie 41, qui forme la partie supérieure arrière de la poutre 40, est tubulaire à section triangulaire avec une face avant 42 qui est inclinée par rapport à l'horizontale, par exemple d'un angle sensiblement égal à 45°. La face 42 est délimitée longitudinalement, le long des deux arêtes de la partie 41 entre lesquelles elle est située, par deux rails 43, 44 de guidage et de support du chariot 12 qui s'étendent parallèlement à l'axe Y.

La deuxième partie 45, qui forme la partie inférieure avant de la poutre 40, est tubulaire et forme à ses extrémités des paliers 46, 47 de support du tambour 20 en rotation sur lui-même autour d'un axe parallèle à la direction Y.

Les surfaces internes rectifiées des paliers 46, 47 assurent le guidage du tambour 20 en rotation, et donc le guidage du support d'impression dans la direction X.

Le chariot 12 comprend une partie en forme de cadre rectangulaire 15 avec deux côtés opposés 13, 14 situés en regard des rails 43, 44 et parallèles à ceux-ci. Le rail 43 situé du côté avant de la machine a deux faces planes de guidage 43a, 43b respectivement verticale et horizontale sur lesquelles roulent des galets 13a, 13b portés par le chariot 12. Les deux galets 13a (non représenté), 13b sont montés libres en rotation sur chacun de deux prolongements du côté 13 du chariot. Le rail 44 parallèle au rail 43 est situé du côté arrière de la machine et à un niveau horizontal plus élevé que celui du rail 43. Le rail 44 a une face plane de guidage 44a parallèle à la face 42 et sur laquelle roule un galet 14a monté libre en rotation dans une ouverture formée sensiblement au milieu du côté 14 du chariot.

Dans un exemple non illustré, les rails 43, 44 sont formés par des barres ou bandes à section rectangulaires rapportées sur la poutre 40 par exemple par collage. Les rails 43, 44 sont disposés dans des rainures section en V formées le long des deux rebords longitudinaux de la face 42. Les faces des rainures sont préalablement rectifiées, avant le montage des rails, de manière à constituer les surfaces de référence pour le guidage du chariot 12 le long de la direction Y. Les rails 43, 44 sont par exemple en acier ou en un autre matériau susceptible de supporter sans détérioration le roulage répété du chariot 12, et la poutre 40 sur laquelle ils s'appuient leur confère la rigidité nécessaire.

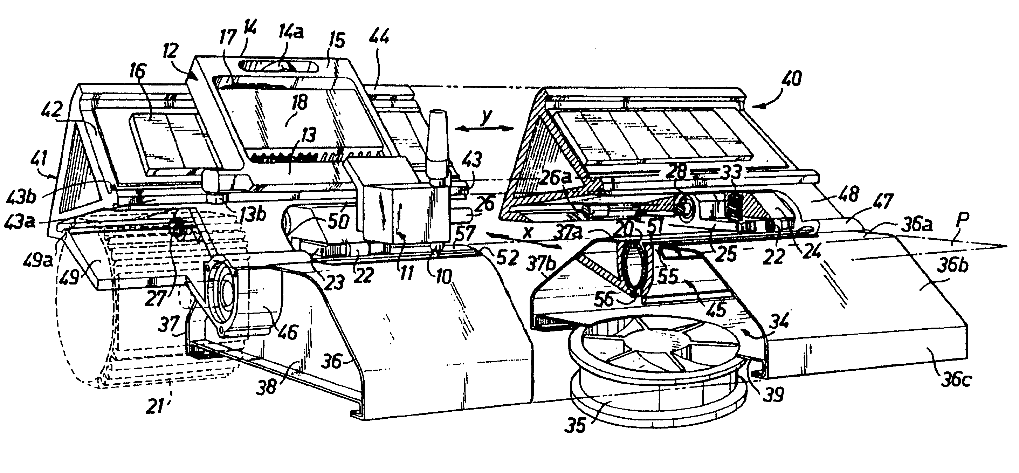

En variante, si le matériau constitutif de la poutre et les conditions d'utilisation de la machine le permettent, les rails 43, 44 pourront être formés d'une seule pièce avec la poutre 40 comme la montre la figure 1.

Bien entendu, on pourra conférer à la partie 41 de la poutre 40 toute autre forme que celle décrite ci-dessus, pour autant qu'elle supporte ou présente toujours au moins un rail s'étendant dans la direction Y pour guider et supporter le chariot 12.

Des parois ou voiles 48, 49 relient la partie 45 à la partie 41 de la poutre. La paroi 48 ce raccorde, le long d'un de ses bords longitudinaux, au voisinage du sommet de la partie tubulaire 45, à l'arrière de ce sommet, et, le long de l'autre bord longitudinal, à l'arête de la partie 41 où se trouve le rail 43. La paroi 48 est sensiblement dans le prolongement de la face 42. Quant à la paroi 49, elle se raccorde, le long d'un de ses bords longitudinaux, au bas et à l'arrière de la partie tubulaire 45 et, le long de l'autre bord longitudinal, à l'arête de la partie 41 opposée à la face 42.

Le passage de la feuille à travers la machine est formé par la découpe 50 pratiquée à la partie supérieure de la partie tubulaire 45 de la poutre et se prolongeant dans la paroi 48. La découpe 50 est formée sur une partie seulement de la longueur de la poutre 40 et ne débouche pas aux extrémités longitudinales de cell-ci. La longueur de la découpe 50 est au moins égale à celle de la zone d'action de la tête d'ecriture 11, c'est-a-dire au moins légèrement supérieure à la largeur maximale de la feuille de papier utilisable avec la machine.

La découpe est limitée suivant un plan horizontal P qui est situé légèrement en-dessous du plan horizontal contenant la génératrice supérieure du tambour 20. Ainsi, entre les paliers 46, 47, la partie tubulaire 45 présente une ouverture allongée 51 à travers laquelle le tambour 20 fait légèrement saillie vers le haut. Du côté avant, l'ouverture 51 est limitée par un rebord dont la face horizontale 52 est située dans le plan P constituant la surface d'appui de la feuille dans la zone d'action de la tête d'écriture 11. Du côté arrière, l'ouverture 51 est limitée par un autre rebord horizontal 57 sur lequel s'appuie la feuille en arrière de la zone d'ecriture. On notera que la paroi de la partie tubulaire 45 présente une surépaisseur au niveau de plan P, pour donner une largeur suffisante aux faces d'appui 52 et 57 dans la zone de travail de la tête d'ecriture.

Une découpe (non représentée) correspondant à la découpe 50 est formée dans la paroi 49 afin de former un passage pour la feuille à l'arrière de la machine.

Des moyens, par exemple électromagnétiques (non représentés), sont prévus pour permettre le déplacement de l'organe d'écriture 10 entre une position relevée (repos) et une position abaissée (travail), soit par déplacement de la tête d'écriture 11 par rapport au chariot 12. De tels moyens de commande de l'abaissement ou du relevage de l'organe d'écriture sont bien connus de sorte que leur description détaillée n'est pas nécessaire ici.

Le déplacement de la feuille dans la direction X est assuré par la rotation du tambour 20 coopérant avec deux galets presseurs 22 qui exercent sur les bords de la feuille une pression tendant à les appliquer contre le tambour.

L'entraînement en rotation du tambour 20 est assuré par le moteur électrique 21 (illustré en tirets sur la figure) fixé à la poutre 40 à une extrémité longitudinale de celle-ci. L'arbre de sortie du moteur 21 et le tambour 20 sont coaxiaux et couplés directement l'un à l'autre.

Les galets presseurs 22 sont montés libres en rotation chacun à une extrémité d'un bras respectif 23 qui est formé en deux parties 24, 25 articulées l'une par rapport à l'autre.

La première partie 24 a une extrémité arrière en forme de bec qui s'adapte sur une nervure horizontale 49a formée à la partie arrière de la paroi 49 du côté intérieur de celle-ci. La liaison entre la partie 24 et la poutre 40 est réalisée au moyen d'une tige horizontale 26 qui s'étend parallèlement à l'axe Y et est portée à ses extrémités par des paliers 27 fixés du côté intérieur de la paroi 48.

L'autre partie 25 de chaque bras 23 forme une levier articulé par rapport à la partie 24 autour d'un axe situé vers l'arrière du bras et portant le galet 22 à son extrémité avant.

La force d'application du galet 22 contre le tambour 20 est produite par un ressort 33 dont les extrémités sont logées dans des évidements formés dans les faces en regard de la partie 24 et du levier 25 à l'avant du bras 23. Le ressort 33 est normalement à l'état comprimé pour exercer une force tendant à solliciter le levier 25 vers le bas par rapport à la partie 24 du bras 23.

L'engagement de la feuille entre le tambour 20 et les galets presseurs 22 est réalisé en relevant les leviers 25 par rapport aux parties 24 à l'encontre de la force exercée par les ressorts 33. La tige 26 porte des cames 28 agissant sur les leviers 25. De la sorte, le relevage simultané des galets presseurs 22 pour permettre l'introduction d'une feuille dans la machine peut être commandé en faisant accomplir à la tige un demi-tour sur elle-même, par exemple au moyen d'un organe de manoeuvre (non représenté) solidaire de la tige 26 à une extrémité de la poutre 40.

Pour maintenir la feuille contre la face d'appui 52 au cours de l'impression, on engendre une dépression sous la face inférieure de la feuille. A cet effet, une pression inférieure à la pression atmosphérique est maintenue dans une chambre 34 au moyen d'un dispositif d'aspiration tel qu'un ventilateur 35. La chambre 34 est délimitée par deux parois latérales 36, 37 qui s'étendent parallèlement à la direction Y, deux parois verticales d'extrémité 38 perpendiculaires à la direction Y et une paroi de fond 39 dans laquelle est formé un passage où le ventilateur 35 est monté.

Les parois 36, 37 se raccordent à la poutre 40 de chaque côté de la partie tubulaire 45 de celle-ci. Du côté avant, la paroi 36 présente une partie horizontale 36a dont la surface supérieure est coplanaire avec la face d'appui 52 et qui se prolonge vers l'avant par une partie 36b inclinée vers le bas à laquelle elle se raccorde progressivement. La partie 36b se raccorde ensuite elle-même progressivement à une partie verticale terminale 36c de la paroi 36. Du côté arrière, la paroi 37 présente une forme symétrique de la paroi 36 par rapport au plan vertical contenant l'axe du tambour 20. En particulier, la paroi 37 présente une partie horizontale 37a dont la surface supérieure est coplanaire avec celle du rebord 53 et qui se raccorde à une partie inclinée passant à travers l'ouverture prévue pour le passage de la feuille à travers la paroi 49.

La paroi 37 est raccordée de façon étanche sur toute sa longueur à la partie tubulaire 45 de la poutre 40. Par contre, sur une longueur légèrement supérieure à celle du tambour 20 entre les paliers 46, 47, la paroi 36 ménage par rapport à la poutre 40 une fente 55 par laquelle la chambre 34 communique avec l'extérieur le long de la surface d'appui 52. On notera aussi la présence de perçages 56 formés dans la partie tubulaire 45 de la poutre et faisant communiquer la chambre 34 avec l'espace intérieur de cette partie tubulaire contenant le tambour 20 et, par conséquent, avec l'ouverture 51 à travers laquelle le tambour 20 fait légèrement saillie vers le haut.

Le fonctionnement des moyens d'entraînement et de guidage de la feuille découle à l'évidence de ce qui précède. La feuille ayant été mise en place et les galets presseurs 22 étant abaissés, le déplacement de la feuille en direction X est réalisé par rotation du tambour 20 dans un sens ou dans l'autre. Au cours de ce déplacement, la dépression engendrée dans la chambre 34 applique la feuille parfaitement contre le tambour 20 et la surface d'appui 52 dans la zone d'écriture grâce aux ouvertures 51 et 55. De plus, les parois 36 et 37 constituent des surfaces de guidage de la feuille. Celle-ci est ainsi guidée sur une grande partie de son déplacement de part et d'autre de la zone d'écriture, sans variation brusque du profil entre la partie horizontale de la feuille dans la zone d'écriture et les parties verticales aux extrémités de la feuille. Ce guidage permet d'éviter un décollement de la feuille dans la zone d'écriture, décollement qui pourrait se produire en l'absence des guides 36 et 37, et en dépit de la force d'application par dépression, sous l'effet de changements de sens de déplacement de la feuille sous forte accélération.

Le déplacement de la tête d'écriture dans la direction Y est réalisé par entraînement du chariot en translation par un moteur linéaire dont l'inducteur est formé par une rangée d'aimants permanents 16 qui sont alignés dans la direction Y et fixés sur la face 42 de la poutre en regard du traject du chariot 12. L'inducteur coopère avec un induit 17 bobiné sur un circuit magnetique 18 porté par le cadre 15 du chariot 12.

L'entraînement du chariot 12 est ainsi réalisé de façon directe, c'est-à-dire sans organes de transmission entre un moteur et le chariot, comme il en est pour le tambour d'entraînement 20. Il en résulte une simplification maximale de la cinématique par réduction du nombre de pièces. L'application directe des mouvements se fait sans jeu et sans élasticité, d'où un optimum de précision statique et dynamique pour les déplacements en X et Y.

De préférence, le moteur linéaire entraînant le chariot et le moteur 21 entraînant le tambour sont choisis de facon à admettre des électroniques de commande identiques. Ce sont, par exemple, l'un et l'autre, dès moteurs à courant continu à commutation électronique. On obtient ainsi, et grâce à l'entraînement direct, des réponses identiques aux signaux de commande de déplacement en X et en Y.

A ces avantages s'ajoutent, bien entendu, ceux résultant de l'intégration des fonctions de support de guidage du chariot et du tambour dans une même structure en un seule pièce. Il est ainsi possible de conserver la précision voulue sur l'orthogonalité entre les directions X et Y pendant toute l'exploitation de la machine et sans les problèmes de réglage et de dilatation différentielle qui pourraient être rencontrés dans le cas où les fonctions précitées sont réalisées par des organes différents.

De plus, la fabrication de la structure de base de la machine demande un minimum d'opérations, à savoir essentiellement la découpe d'un profilé à la dimension voulue (le profilé étant avantageusement standard pour une gamme de machines), et l'usinage des surfaces définissant le guidage du chariot et du tambour.

## Revendications

1. Machine à dessiner comprenant un chariot (12) portant une tête d'écriture (11), un dispositif de guidage du chariot en translation suivant une première direction, des premiers moyens (16, 17, 18) d'entraînement pour entraîner le chariot en déplacement dans cette première direction, un tambour (20) mobile en rotation autour d'un axe parallèle à la première direction, des moyens (22, 59) d'engagement d'un support d'impression avec le tambour, et des deuxièmes moyens d'entraînement pour entraîner ledit tambour en rotation afin de déplacer le support d'impression dans une deuxième direction perpendiculaire à la première; ladite machine étant caractérisée en ce qu'elle comporte une poutre profilée en une seule pièce (40) s'étendant suivant la premiere direction avec une première partie (41) qui, par sa rigidité propre, supporte et guide le chariot (12) portant la tête d'écriture (11) tout le long de son déplacement dans la première direction (Y), et avec une deuxième partie tubulaire (45) pour recevoir ledit tambour (20), une ouverture allongée (51) étant formée dans la deuxième partie tubulaire (45) tout le long de la zone d'action de la tête d'écriture pour permettre d'écrire sur le support d'impression passant par ledit tambour (20).

2. Machine selon la revendication 1, caractérisée en ce qu'une découpe (50) est formée dans la poutre profilée (40) tout le long de la zone d'action de la tête d'écriture pour permettre le passage du support d'impression entre ledit tambour (20) et ladite première partie (41) de la poutre (40).

3. Machine selon l'une quelconque des revendications 1 et 2, caractérisée en ce que ladite première partie (41) de la poutre (40) porte au moins un rail de support et de guidage (43, 44) du chariot (12).

4. Machine selon la revendication 3, caractérisée en ce que le ou chaque rail est rapporté sur la poutre (40) qui lui confère la rigidité nécessaire.

5. Machine selon l'une quelconque des revendications 1 à 4, caractérisée en ce que le dispositif de guidage du chariot (12) comprend deux rails de guidage (43, 44).

6. Machine selon l'une quelconque des revendications 1 à 5, caractérisée en ce que les moyens d'entraînement du chariot (12) sont constitués par un moteur linéaire (16, 17, 18).

7. Machine selon la revendication 6, caractérisée en ce que le moteur linéaire comprend un induit (17) porté par le chariot, et un inducteur formé par une rangée d'aimants (16) alignés suivant la première direction et fixés sur une face (42) de la poutre profilée (40) disposée entre des rails de guidage (43, 44) pour le chariot (12).

8. Machine selon l'une quelconque des revendications 1 à 7, caractérisée en ce que ledit tambour (20) est entraîné en rotation par un moteur à l'arbre duquel il est couplé directement.

9. Machine selon l'une quelconque des revendications 1 à 8, pour l'impression feuille à feuille, caractérisée en ce que la poutre (40) présente dans la zone d'action de la tête d'écriture une surface d'appui (42) pour ledit support d'impression.

10. Machine selon la revendication 9, caractérisée en ce que des moyens sont prévus pour établir une dépression agissant du côté inférieur dudit support d'impression.

11. Machine selon l'une quelconque des revendications 9 et 10, caractérisée en ce qu'elle comprend des organes de guidage (36, 37) du support d'impression situés de part et d'autre de la zone d'action de la tête d'écriture et offrant au support d'impression des surfaces de guidage qui raccordent progressivement le plan horizontal dans lequel se trouve la partie du support d'impression située dans la zone d'action de l'organe d'écriture à des plans verticaux situés à l'avant et à l'arrière de la machine.

**Patentansprüche**

1. Maschine zum Zeichnen, mit einem Wagen (12), der einen Schreibkopf (11) trägt, einer Führungseinrichtung für die Translationsbewegung des Wagens in einer ersten Richtung, ersten Antriebsmitteln (16,17,18) zum Antrieb des Wagens in dieser ersten Richtung, einer Trommel (20), die um eine zu der ersten Richtung parallele Achse drehbar ist, Mitteln (22,59) zum Andrücken eines Aufzeichnungsträgers an die Trommel und zweiten Antriebsmitteln zum Drehantrieb der Trommel zur Bewegung des Aufzeichnungsträgers in einer zweiten Richtung rechtwinklig zu der ersteren, dadurch gekennzeichnet, daß die Maschine einen sich in der ersten Richtung erstreckenden einstückigen Profilträger (40) aufweist mit einem ersten Teil (41), der durch seine Eigensteifheit den Wagen (12), der den Schreibkopf (11) trägt, auf der gesamten Länge seines Verschiebeweges in der ersten Richtung (Y) trägt und führt, und mit einem rohrförmigen zweiten Teil (45) zur Aufnahme der Trommel (20), wobei eine langgestreckte Öffnung (51) auf der gesamten Länge der Arbeitszone des Schreibkopfes in dem rohrförmigen zweiten Teil (45) gebildet ist, um das Schreiben auf dem über die Trommel (20) laufenden Aufzeichnungsträger zu ermöglichen.

2. Maschine nach Anspruch 1, dadurch gekennzeichnet, daß in dem Profilträger (40) auf der gesamten Länge der Arbeitszone des Schreibkopfes eine Ausnehmung (50) ausgebildet ist, um den Durchtritt des Aufzeichnungsträger zwischen der Trommel (20) und dem ersten Teil (41) des Trägers (40) zu ermöglichen.

3. Maschine nach einem der Ansprüche 1 und 2, dadurch gekennzeichnet, daß der erste Teil (41) des Trägers (40) wenigstens eine Trag- und Führungsschiene (43,44) für den Wagen (12) trägt.

4. Maschine nach Anspruch 3, dadurch gekennzeichnet, daß die Schiene oder jede der Schienen auf den Träger (40) aufgesetzt ist, der ihr die nötige Steifheit verleiht.

5. Maschine nach irgendeinem der Ansprüche 1 bis 4, dadurch gekennzeichnet, daß die Führungseinrichtung für den Wagen (12) zwei Führungsschienen (43,44) aufweist.

6. Maschine nach irgendeinem der Ansprüche 1 bis 5, dadurch gekennzeichnet, daß die Antriebsmittel für den Wagen (12) durch einen Linearmotor (16,17,18) gebildet werden.

7. Maschine nach Anspruch 6, dadurch gekennzeichnet, daß der Linearmotor einen an dem Wagen gehaltenen Läufer (17) und einen Feldmagneten aufweist, der gebildet wird durch eine Reihe von Magneten (16), die in der ersten Richtung aufgereiht und auf einer zwischen den Führungsschienen (43,44) für den Wagen (12) angeordneten Fläche (42) des Profilträgers (40) befestigt sind.

8. Maschine nach irgendeinem der Ansprüche 1 bis 7, dadurch gekennzeichnet, daß der Drehantrieb der Trommel (20) durch einen Motor erfolgt, an dessen Welle sie unmittelbar angekoppelt ist.

9. Maschine nach irgendeinem der Ansprüche 1 bis 8, für das blattweise Zeichnen, dadurch gekennzeichnet, daß der Träger (40) in der Arbeitszone des Schreibkopfes eine Anlagefläche (42) für den Aufzeichnungsträger aufweist.

10. Maschine nach Anspruch 9, dadurch gekennzeichnet, daß Mittel zur Erzeugung eines auf die Unterseite des Aufzeichnungsträgers wirkenden Unterdruckes vorgesehen sind.

11. Maschine nach Anspruch 9 oder 10, dadurch gekennzeichnet, daß sie Führungsorgane (36,37) für den Aufzeichnungsträger aufweist, die beiderseits der Arbeitszone des Schreibkopfes angeordnet sind und dem Aufzeichnungsträger Führungsflächen bieten, welche die waagerechte Ebene, in der sich der in der Arbeitszone des Schreiborgans liegende Teil des Aufzeichnungsträgers befindet, fortlaufend mit vertikalen Ebenen verbinden, die vor und hinter der Maschine angeordnet sind.

## Claims

1. Drawing machine comprising a carriage (12) carrying a writing head (11), apparatus for guiding the carriage in translation according to a first direction, first entrainment means (16, 17, 18) to entrain the carriage in displacement in this first direction, a drum (20) rotatably movable about an axis parallel to the first direction, means (22, 59) for engaging a printing support with the drum and second entrainment means to entrain the said drum in rotation with the object of displacing the printing support in a second direction perpendicular to the first; the said machine being characterised in that it comprises a shaped beam in a single piece (40) extending according to the first direction with a first portion (41) which, by its own rigidity, supports and guides the carriage (12) carrying the writing head (11) along its entire displacement in the first direction (Y) and with a second tubular portion (45) to receive the said drum (20), an elongate opening (51) being formed in the second tubular portion (45) along the entire action zone of the writing head in order to permit writing on the printing support passing by means of the said drum (20).

2. Machine according to Claim 1, characterised in that a cutout (50) is formed in the profiled beam (40) along the entire length of the zone of action of the writing head in order to allow the passage of the printing support between the said drum (20) and the said first portion (41) of the beam (40).

3. Machine according to any one of Claims 1 and 2, characterised in that the said first portion (41) of the beam (40) carries at least one support and guide rail (43, 44) for the carriage (12).

4. Machine according to Claim 3, characterised in that the or each rail is mounted on the beam (40) which imparts to it the necessary rigidity.

5. Machine according to any one of Claims 1 to 4, characterised in that the guide apparatus for the carriage (12) comprises two guide rails (43, 44).

6. Machine according to any one of Claims 1 to 5, characterised in that the entrainment means for the carriage (12) are formed by a linear motor (16, 17, 18).

7. Machine according to Claim 6, characterised in that the linear motor comprises an inductance (17) carried by the carriage and an inductor formed by a range of magnets (16) aligned according to the first direction and fixed on one face (42) of the shaped beam (40) located between the guide rails (43, 44) for the carriage (12).

8. Machine according to any one of Claims 1 to 7, characterised in that the said drum (20) is entrained in rotation by a motor to the shaft of which it is directly coupled.

9. Machine according to any one of Claims 1 to 8 for sheet-by-sheet printing, characterised in that the beam (40) has in the zone of action of the writing head a support surface (42) for the said printing support.

10. Machine according to Claim 9, characterised in that means are provided to establish a reduced pressure acting on the lover side of the said printing support.

11. Machine according to any one of Claims 9 and 10, characterised in that it comprises guide elements (36, 37) for the printing support situated on the one and other side of the zone of action of the writing head and presenting to the printing support guide surfaces which progressively connect the horizontal plane in which the part of the printing support located in the zone of activity of the writing element is located to vertical planes situated to the front and to the rear of the machine.

EP 0 247 943 B1